# EUROPÄISCHE PATENTANMELDUNG

(11) **EP 2 492 452 A1**
(43) Veröffentlichungstag der Anmeldung: **29.08.2012**
(21) Anmeldenummer: 11155389.7
(22) Anmeldetag: 22.02.2011
(51) Int. Cl.: F01D 21/00, G01B 11/14

(54) **Verfahren zur Konstruktion einer Strömungsmaschine**

(71) Anmelder: SIEMENS AKTIENGESELLSCHAFT, 80333 München (DE)
(72) Erfinder: Klein, Karsten, 14089 Berlin (DE)

(57) **Zusammenfassung**

Ein Verfahren zur Konstruktion einer Strömungsmaschine mit einem Rotor mit einer Anzahl von einen Laufschaufelkranz bildenden Laufschaufeln (114) soll eine vergleichsweise hohe Lebensdauer der Laufschaufel und gleichzeitig einen besonders hohen Wirkungsgrad der Strömungsmaschine ermöglichen. Dazu erfolgt eine Messung bezüglich des Durchmessers des Rotors mit den Laufschaufeln (114), indem der Rotor mit dem Laufschaufelkranz in eine Rotationsbewegung versetzt wird, außerhalb des Bereichs des Laufschaufelkranzes eine diesem zugeordnete Abstandsmesseinrichtung (124) angeordnet wird, und der Abstand zu den an der Abstandsmesseinrichtung (124) vorbei rotierenden Laufschaufeln (114) des Laufschaufelkranzes gemessen wird.

## Beschreibung

Die Erfindung betrifft ein Verfahren zur Konstruktion einer Strömungsmaschine mit einem Rotor mit einer Anzahl von einen Laufschaufelkranz bildenden Laufschaufeln. Sie betrifft weiter ein Messsystem für einen Rotor einer Strömungsmaschine.

Strömungsmaschinen umfassen allgemein kontinuierlich arbeitende Fluidenergiemaschinen wie Verdichter, Dampf- und Gasturbinen. In einer Gasturbine wird Energie aus einem heißen Verbrennungsgas in Bewegungsenergie umgewandelt, die einerseits einen vorgeschalteten Verdichter und andererseits typischerweise einen Generator zur Erzeugung von Strom antreibt. Eine Gasturbine kann aber auch zum Antrieb von Flugzeugen verwendet werden.

Gasturbinen umfassen einerseits feststehende Leitschaufeln, die den Luft- und Gasstrom führen, und am Rotor der Gasturbine befindliche Laufschaufeln, die um die Achse der Strömungsmaschine rotieren und in axialer Richtung hintereinander angeordnete Laufschaufelkränze bilden. Typischerweise erstrecken sich die Laufschaufeln von der Achse der Strömungsmaschine bis zu einer koaxial dazu angeordneten Innenwand, die somit den Strömungskanal für das Verbrennungsgas definiert. Dabei soll der Abstand zwischen dem Körper der Laufschaufel und der Innenwand möglichst gering gehalten werden, um den Wirkungsgradverlust durch entlang der Innenwand an den Laufschaufeln vorbeiströmendes Verbrennungsgas zu minimieren.

Durch unterschiedliche thermische Ausdehnung von Innenwand und Laufschaufel, Zentrifugalkräfte und radiale Beschleunigungen sowie Montagespiel der beteiligten Bauteile kann jedoch der Abstand zwischen Innenwand und ihr gegenüberliegenden Laufschaufelspitzen variieren. Um dabei Beschädigungen des Laufschaufelkörpers bzw. der Innenwand zu vermeiden, ist ein gewisser Mindestabstand bei der Konstruktion der Gasturbine einzuplanen. Derartige Beschädigungen könnten nämlich in einer Reduzierung der Lebensdauer der Laufschaufeln oder der Innenwand resultieren.

Aufgabe der Erfindung ist es daher, ein Verfahren zur Konstruktion einer Strömungsmaschine anzugeben, das eine vergleichsweise hohe Lebensdauer der Laufschaufel und gleichzeitig einen besonders hohen Wirkungsgrad der Strömungsmaschine ermöglicht.

Diese Aufgabe wird erfindungsgemäß gelöst, indem eine Messung bezüglich des Durchmessers des Rotors mit den Laufschaufeln erfolgt, indem der Rotor mit dem Laufschaufelkranz in eine Rotationsbewegung versetzt wird, außerhalb des Bereichs des Laufschaufelkranzes eine diesem zugeordnete Abstandsmesseinrichtung angeordnet wird, und der Abstand zu den an der Abstandsmesseinrichtung vorbei rotierenden Laufschaufeln des Laufschaufelkranzes gemessen wird.

Die Erfindung geht dabei von der Überlegung aus, dass eine vergleichsweise hohe Lebensdauer bei gleichzeitiger Optimierung des Wirkungsgrades durch eine kontrollierte Reduzierung der Mindestabstands zwischen Innenwand und Laufschaufelspitzen erreichbar wäre. Dabei ist dieser Mindestabstand insbesondere deshalb erforderlich, da die Laufschaufeln beim Einbau in den Rotor im kalten Zustand ein gewisses Spiel haben, das in die entsprechenden Toleranzmodelle integriert werden muss. Dieses Spiel führt zu einer Schwankung im Durchmesser des Rotors mit den eingebauten Laufschaufeln am jeweiligen Laufschaufelkranz.

Im rotierenden Zustand wird jedoch das Spiel der Laufschaufeln in der entsprechenden Halterung am Rotor durch die Zentrifugalkraft eliminiert. Daher sollte eine Messung bezüglich des Durchmessers des Rotors mit den Laufschaufeln in einer Rotationsbewegung erfolgen, da hier aufgrund des nichtvorhandenen Spiels dann eine wesentlich geringere Toleranz hinsichtlich des Mindestabstands zur Innenwand einzuplanen ist. Dazu wird außerhalb des Bereichs des Laufschaufelkranzes eine diesem zugeordnete Abstandsmesseinrichtung angeordnet wird, und der Abstand zu den an der Abstandsmesseinrichtung vorbei rotierenden Laufschaufeln des Laufschaufelkranzes gemessen wird.

In vorteilhafter Ausgestaltung wird dabei außerhalb des Bereichs des Laufschaufelkranzes eine diesem zugeordnete zweite Abstandsmesseinrichtung angeordnet. Eine einzelne Abstandsmesseinrichtung vermag nämlich lediglich den Abstand der Laufschaufeln zu einem fixen Bezugssystem zu messen, dessen Bezug zur festen Achse des Rotors aber nicht bekannt sein muss. Durch die Kombination mit einer zweiten Abstandsmesseinrichtung und entsprechende Kalibrierung der beiden Messeinrichtungen wird die absolute Messung des Rotordurchmessers ermöglicht. Dazu wird die relative Lage der zweiten Abstandsmesseinrichtung zur ersten Abstandsmesseinrichtung ermittelt und der Abstand zu den an der zweiten Abstandsmesseinrichtung vorbei rotierenden Laufschaufeln des Laufschaufelkranzes gemessen.

In axialer Richtung verändert sich typischerweise der Durchmesser des Rotors der Strömungsmaschine. Da im Turbinenteil einer Gasturbine das Gas entspannt wird, wird hier der Durchmesser zum Austritt hin größer. Daher ist für jeden Laufschaufelkranz, der eine separate Laufschaufellänge hat, eine weitere Durchmessermessung vorzunehmen, um auch hier eine Optimierung des Mindestabstands zur Innenwand zu erreichen. Dazu wird vorteilhafterweise außerhalb des Bereichs eines zweiten Laufschaufelkranzes eine diesem zugeordnete dritte Abstandsmesseinrichtung angeordnet und der Abstand zu den an der dritten Abstandsmesseinrichtung vorbei rotierenden Laufschaufeln des zweiten Laufschaufelkranzes gemessen. Eine derartige zusätzliche Anordnung einer oder mehrerer Abstandsmesseinrichtungen ermöglicht eine zuverlässige Ermittlung des Durchmessers in jedem axialen Bereich des Rotors.

In alternativer oder zusätzlicher vorteilhafter Ausgestaltung des Verfahrens wird die jeweilige Abstandsmesseinrichtung in axialer Richtung des Rotors verschoben. Durch eine derartige, verschiebbar angeordnete Abstandsmesseinrichtung wird eine Messung an verschiedenen Laufschaufelkränzen in unterschiedlichen axialen Bereichen des Motors ermöglicht, ohne eine Vielzahl von Abstandsmesseinrichtungen verwenden zu müssen.

Vorteilhafterweise wird als die jeweilige Abstandsmesseinrichtung eine optische Abstandsmesseinrichtung, in besonders vorteilhafter Ausgestaltung eine Laserabstandsmesseinrichtung verwendet. Dadurch wird eine besonders genaue Messung der Abstände ermöglicht, wodurch der Mindestabstand der Innenwand zu den Laufschaufeln noch präziser angepasst werden kann.

In besonders vorteilhafter Ausgestaltung wird das Verfahren in einem Auswuchtsystem und/oder während des Auswuchtens des Rotors durchgeführt. Während des Auswuchtens werden Unwuchten des Rotors beseitigt, bevor er der Endmontage in der Turbine zugeführt wird. Dazu wird der Rotor in Rotation versetzt und entsprechende Unwuchten vermessen. Dieser Vorgang, bei dem das Spiel der Laufschaufeln durch die Rotation eliminiert wird, lässt in der Art einer Doppelnutzung auch für die beschriebene Messung des Durchmessers nutzen, so dass hier ein besonders schneller und ökonomischer Konstruktionsprozess erreicht wird.

Vorteilhafterweise wird eine Mindestdrehzahl für die Rotationsbewegung während der Ausführung der Messung vorgegeben. Dadurch ist sichergestellt, dass das Spiel der Laufschaufeln auch sicher eliminiert ist und entsprechende Toleranzen ausgeschlossen werden. Die Mindestdrehzahl sollte dabei spezifisch anhand der Parameter des Rotors ermittelt werden.

Der auf diese Weise gemessene Durchmesser des Rotors wird vorteilhafterweise bei der Konstruktion des Innengehäuses der Strömungsmaschine verwendet. Dabei kann der Mindestabstand durch die nun erheblich verringerte Toleranz im Rotordurchmesser verringert werden und es wird ein höherer Wirkungsgrad erzielt.

Vorteilhafterweise ist eine Strömungsmaschine mit dem dargestellten Verfahren konstruiert und kommt in vorteilhafter Ausgestaltung in einer Kraftwerksanlage zum Einsatz.

Bezüglich des Messsystems für einen Rotor einer Strömungsmaschine wird die Erfindung gelöst, indem das Messsystem eine Haltevorrichtung für den Rotor mit einer Anzahl von einen Laufschaufelkranz bildenden Laufschaufeln umfasst, weiter eine Antriebsvorrichtung, ausgebildet zum Versetzen des Rotors in eine Rotationsbewegung, und eine Abstandsmesseinrichtung, ausgebildet zum Messen des Abstands zu den an der Abstandsmesseinrichtung vorbei rotierenden Laufschaufeln des Laufschaufelkranzes.

Die mit der Erfindung erzielten Vorteile bestehen insbesondere darin, dass durch die Messung des Rotordurchmessers während der Rotation eine genauere Bestimmung des Rotordurchmessers ermöglicht wird, so dass der Abstand zur Innenwand bei der Konstruktion verringert und somit der Wirkungsgrad der Strömungsmaschine erhöht werden kann. Dies wird erst durch die präzise Vorhersage des Rotordurchmessers und der damit verbundenen Toleranzen und Ablaufmaße ermöglicht. Die optimierte Kontrolle des Rotordurchmessers führt somit zu einer Optimierung des Herstellungsprozesses.

Ein Ausführungsbeispiel der Erfindung wird anhand einer Zeichnung erläutert. Darin zeigen:
- FIG 1: eine Gasturbine, und
- FIG 2: eine idealisierte Schnittansicht des Rotors während des Auswuchtprozesses.

Gleiche Teile sind in allen Figuren mit denselben Bezugszeichen versehen.

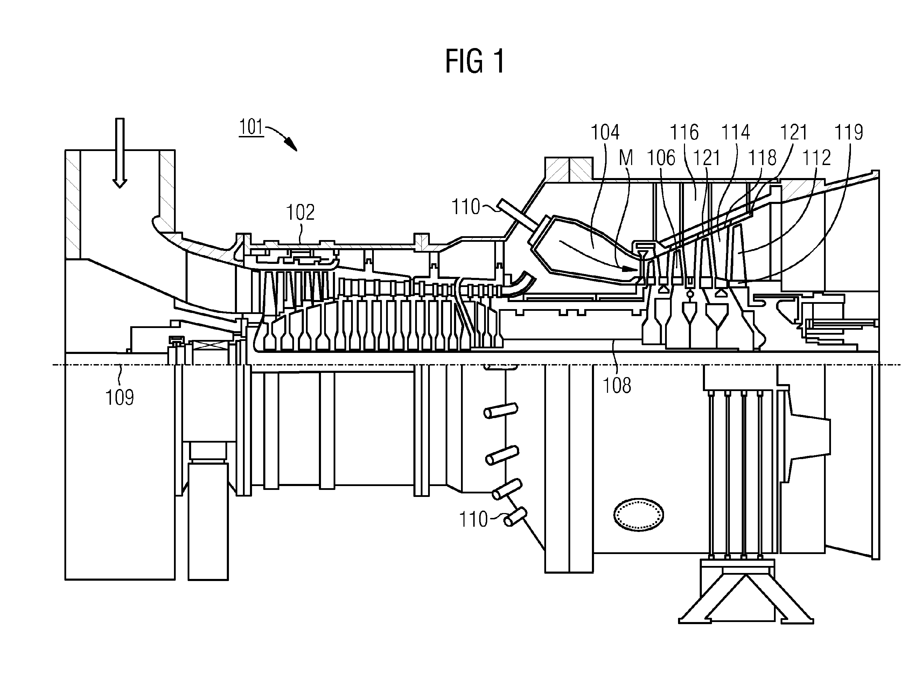

Eine Gasturbine 101, wie in FIG 1 dargestellt, weist einen Verdichter 102 für Verbrennungsluft, eine Brennkammer 104 sowie eine Turbineneinheit 106 zum Antrieb des Verdichters 102 und eines nicht dargestellten Generators oder einer Arbeitsmaschine auf. Dazu sind die Turbineneinheit 106 und der Verdichter 102 auf einer gemeinsamen, auch als Turbinenläufer bezeichneten Turbinenwelle 108 angeordnet, mit der auch der Generator bzw. die Arbeitsmaschine verbunden ist, und die um ihre Mittelachse 109 drehbar gelagert ist. Diese Einheiten bilden den Rotor der Gasturbine 101. Die in der Art einer Ringbrennkammer ausgeführte Brennkammer 104 ist mit einer Anzahl von Brennern 110 zur Verbrennung eines flüssigen oder gasförmigen Brennstoffs bestückt.

Die Turbineneinheit 106 weist eine Anzahl von mit der Turbinenwelle 108 verbundenen, rotierbaren Laufschaufeln 112 auf. Die Laufschaufeln 112 sind kranzförmig an der Turbinenwelle 108 angeordnet und bilden somit eine Anzahl von Laufschaufelkränzen oder -reihen. Weiterhin umfasst die Turbineneinheit 106 eine Anzahl von feststehenden Leitschaufeln 114, die ebenfalls kranzförmig unter der Bildung von Leitschaufelreihen an einem Leitschaufelträger 116 der Turbineneinheit 106 befestigt sind. Die Laufschaufeln 112 dienen dabei zum Antrieb der Turbinenwelle 108 durch Impulsübertrag vom die Turbineneinheit 106 durchströmenden Arbeitsmedium M. Die Leitschaufeln 114 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 114 oder einer Leitschaufelreihe und aus einem Kranz von Laufschaufeln 112 oder einer Laufschaufelreihe wird dabei auch als Turbinenstufe bezeichnet.

Jede Leitschaufel 114 weist eine Plattform 118 auf, die zur Fixierung der jeweiligen Leitschaufel 114 an einem Leitschaufelträger 116 der Turbineneinheit 106 als Wandelement angeordnet ist. Die Plattform 118 ist dabei ein thermisch vergleichsweise stark belastetes Bauteil, das die äußere Begrenzung eines Heißgaskanals für das die Turbineneinheit 106 durchströmende Arbeitsmedium M bildet. Jede Laufschaufel 112 ist in analoger Weise über eine auch als Schaufelfuß bezeichnete Plattform 119 an der Turbinenwelle 108 befestigt.

Zwischen den beabstandet voneinander angeordneten Plattformen 118 der Leitschaufeln 114 zweier benachbarter Leitschaufelreihen ist jeweils ein Ringsegment 121 an einem Leitschaufelträger 1 der Turbineneinheit 106 angeordnet. Die äußere Oberfläche jedes Ringsegments 121 ist dabei ebenfalls dem heißen, die Turbineneinheit 106 durchströmenden Arbeitsmedium M ausgesetzt und in radialer Richtung vom äußeren Ende der ihm gegenüber liegenden Laufschaufeln 112 durch einen Spalt beabstandet. Die zwischen benachbarten Leitschaufelreihen angeordneten Ringsegmente 121 dienen dabei insbesondere als Abdeckelemente, die das Innengehäuse im Leitschaufelträger 116 oder andere Gehäuse-Einbauteile vor einer thermischen Überbeanspruchung durch das die Turbine 106 durchströmende heiße Arbeitsmedium M schützen.

Die Brennkammer 104 ist im Ausführungsbeispiel als so genannte Ringbrennkammer ausgestaltet, bei der eine Vielzahl von in Umfangsrichtung um die Turbinenwelle 108 herum angeordneten Brennern 110 in einen gemeinsamen Brennkammerraum münden. Dazu ist die Brennkammer 104 in ihrer Gesamtheit als ringförmige Struktur ausgestaltet, die um die Turbinenwelle 108 herum positioniert ist.

Der dargestellte Spalt zwischen den Laufschaufeln 112 einerseits und den Ringsegmenten 121 und Plattformen 118 andererseits, die gemeinsam die Innenwand des Heißgaskanals bilden, sollte zur Erhöhung des Wirkungsgrads besonders gering gehalten werden. Dies wird durch präzise Bestimmung des Durchmessers des Rotors ermöglicht.

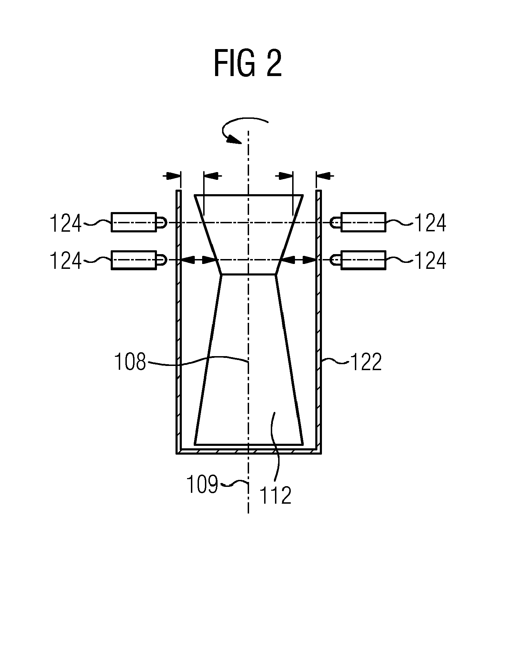

Die Messung des Rotordurchmessers erfolgt während des Auswuchtvorgangs. Hier ist der Rotor mit Turbinenwelle 108 und Laufschaufeln 112 in einem Auswuchtgehäuse 122 angeordnet, wie in FIG 2 schematisch dargestellt. Während des Auswuchtvorgangs wird der Rotor in Rotationsbewegung versetzt und entsprechende Unwuchten lokalisiert und ausgeglichen. Die Rotationsbewegung ist mit einer vorgegebenen Mindestdrehzahl durchgeführt und eliminiert so auch das Spiel der Laufschaufeln 112 in ihrer Befestigung an der Turbinenwelle 108. Dadurch kann in diesem Zustand eine besonders präzise Messung des Durchmessers des Rotors erfolgen.

Dazu sind in FIG 2 vier Abstandsmesseinrichtungen 124, die als Laserabstandsmesseinrichtungen ausgebildet sind, jeweils paarweise gegenüberliegend angeordnet. Die Abstandsmesseinrichtungen 124 sind in axialer Richtung entlang der Mittelachse 109 bewegbar und können somit paarweise jeweils einem beliebigen Laufschaufelkranz zugeordnet werden. Die Entfernung der jeweils paarweise angeordneten Abstandsmesseinrichtungen 124 wurde im Vorfeld präzise bestimmt, so dass durch die beidseitige Abstandsmessung zu den Laufschaufeln 112 präzise der Durchmesser des Rotors an jedem Laufschaufelkranz ermittelt werden kann.

Durch diese Kenntnis ist es möglich, den Spalt zwischen Innenwand und Laufschaufeln 112 bei der Konstruktion der Gasturbine 101 zu minimieren und so den Wirkungsgrad zu erhöhen.

## Patentansprüche

1. Verfahren zur Konstruktion einer Strömungsmaschine mit einem Rotor mit einer Anzahl von einen Laufschaufelkranz bildenden Laufschaufeln (114), bei dem eine Messung bezüglich des Durchmessers des Rotors mit den Laufschaufeln (114) erfolgt, indem
der Rotor mit dem Laufschaufelkranz in eine Rotationsbewegung versetzt wird,
außerhalb des Bereichs des Laufschaufelkranzes eine diesem zugeordnete Abstandsmesseinrichtung (124) angeordnet wird, und
der Abstand zu den an der Abstandsmesseinrichtung (124) vorbei rotierenden Laufschaufeln (114) des Laufschaufelkranzes gemessen wird.

2. Verfahren nach Anspruch 1,
bei dem außerhalb des Bereichs des Laufschaufelkranzes eine diesem zugeordnete zweite Abstandsmesseinrichtung (124) angeordnet wird,
die relative Lage der zweiten Abstandsmesseinrichtung zur ersten Abstandsmesseinrichtung (124) ermittelt wird und
der Abstand zu den an der zweiten Abstandsmesseinrichtung (124) vorbei rotierenden Laufschaufeln (114) des Laufschaufelkranzes gemessen wird.

3. Verfahren nach einem der vorhergehenden Ansprüche,
bei dem außerhalb des Bereichs eines zweiten Laufschaufelkranzes eine diesem zugeordnete dritte Abstandsmesseinrichtung (124) angeordnet wird, und
der Abstand zu den an der dritten Abstandsmesseinrichtung (124) vorbei rotierenden Laufschaufeln (114) des zweiten Laufschaufelkranzes gemessen wird.

4. Verfahren nach einem der vorhergehenden Ansprüche,
bei dem die jeweilige Abstandsmesseinrichtung (124) in axialer Richtung des Rotors verschoben wird.

5. Verfahren nach einem der vorhergehenden Ansprüche,
bei dem als die jeweilige Abstandsmesseinrichtung (124) eine optische Abstandsmesseinrichtung (124) verwendet wird.

6. Verfahren nach Anspruch 5,
bei dem als optische Abstandsmesseinrichtung (124) eine Laserabstandsmesseinrichtung (124) verwendet wird.

7. Verfahren nach einem der vorhergehenden Ansprüche,
das in einem Auswuchtsystem und/oder während des Auswuchtens des Rotors durchgeführt wird.

8. Verfahren nach einem der vorhergehenden Ansprüche,
bei dem eine Mindestdrehzahl für die Rotationsbewegung vorgegeben wird.

9. Verfahren nach einem der vorhergehenden Ansprüche,
bei dem der gemessene Durchmesser des Rotors bei der Konstruktion des Innengehäuses der Strömungsmaschine verwendet wird.

10. Strömungsmaschine,
konstruiert mit dem Verfahren nach einem der vorhergehenden Ansprüche.

11. Kraftwerksanlage mit einer Strömungsmaschine nach Anspruch 10.

12. Messsystem für einen Rotor einer Strömungsmaschine mit einer Haltevorrichtung für den Rotor mit einer Anzahl von einen Laufschaufelkranz bildenden Laufschaufeln (114), einer Antriebsvorrichtung, ausgebildet zum Versetzen des Rotors in eine Rotationsbewegung, und einer Abstandsmesseinrichtung (124), ausgebildet zum Messen des Abstands zu den an der Abstandsmesseinrichtung (124) vorbei rotierenden Laufschaufeln (114) des Laufschaufelkranzes.
